# EUROPEAN PATENT SPECIFICATION

(11) **EP 0 616 037 B1**
(45) Date of publication and mention of the grant of the patent: **12.05.1999**
(21) Application number: 93914747.6
(22) Date of filing: 06.07.1993
(51) Int. Cl.: C14C 9/02

(54) **METHOD FOR THE REGENERATIVE AND PRESERVATIVE TREATMENT OF LEATHER, SPECIALLY BINDINGS**
VERFAHREN ZUR REGENERIERUNG UND KONSERVIERUNG VON LEDER, INSBESONDERE BUCHUMSCHLAEGE AUS LEDER
PROCEDE DE TRAITEMENT REGENERATEUR ET CONSERVATEUR DES PEAUX, EN PARTICULIER DES RELIURES

(30) Priority: 10.07.1992 ES 9201431
(43) Date of publication of application: 21.09.1994
(73) Proprietor: HITA BOHAJAR, Maria, E-28013 Madrid (ES)
(72) Inventor: HITA BOHAJAR, Maria, E-28013 Madrid (ES)
(86) International application number: ES9300061
(87) International publication number: WO9401588

(56) References cited:
- Derwent Publications Ltd (London, GB), AN=91-028168, & SU,A,1546496 (LENIN STATE LIBRARY) 28 february 1990, see abstract
- Derwent Publications Ltd (London, GB), AN=80-24829C, & SU,A,676618 (KHACHATRYAN) 30 July 1979, see abstract
- Derwent Publications Ltd (London, GB), AN=91-028167, & SU,A,1546495 (LENIN STATE LIBRARY) 28 february 1990, see abstract
- Derwent Publications Ltd (London, GB), AN=90-340660, & SU,A,1534054 (LENIN STATE LIBRARY) 7 January 1979, see abstract
- Derwent Publications Ltd (London, GB), AN=93-241848, & SU,A,1754105 (ALTAI MED. INST.) 15 August 1992, see abstract

## Description

The invention refers, as previously stated in the title, to a treatment designed to regenerate and preserve leather, with the intention of returning their genuine characteristics to very deteriorated leather and parchment.

A special application of the invention is directed to obtain these results with binding leather, which deteriorates progressively with age to the point where it becomes nearly destroyed.

The application of this method is very easy to use, and implies great advantage in libraries, files, and the like, where large number of bound volumes are held. This permits them to be kept in the original binding without having to replace or repair them, which could result in a loss of their historic value as an antique.

The method applicable to this invention is the result of many years of research, after testing on over eighty ethnografic pieces and many other old leather-bound books.

The composition and methodologie used represent innovative state of the art techniques. Contacts have been established with national and foreing institution dedicated to the restoring and preserving of these type of materials and they have stated that there is no product in the market similar to the invention, nor one which obtains such positive results.

In summary, the method consists in the use of three different compositions, which are comprised of different components and are applied in a specific order and through a conveniently designed methodology.

Given the nature of the material to be treated and considering the great variety available (different types and characteristics, tanning processes, tanning materials, and types of degradation) the components of this process may be varied depending on the pieces to be treated.Thus, the proportion of these components should be used within an ample range of proportions so as to permit their application to specific cases. The desciption given refers, in any case, to citeria for a standard use.

The method for the regenerating and preserving of leather, comprises the following phases:
a) Applying a nutritive cream to the leather to be treated and spreading over the entire surface. This nutritive cream is made from saponified grease (75 to 150 ml.); excipient (150 to 300 ml.); distilled glycerin (50 to 100 ml.); liquid paraffin (25 to 50 ml.); cod-fish liver oil (15 to 50 ml.); mink oil (15 to 50 ml.); castor oil (15 to 50 ml.); wool fat (25 to 50 ml.); collagen (solution) (40 to 75 ml.); elastin (solution) (40 to 75 ml.);sodium tetraborate (5 to 10 gr.), essence of bitter almonds (10 to 15 ml.).This cream is prepared at bain-marie, firstly by mixing with the excipient with the saponified grease and later adding the remaining components one after the other, stirring constantly with a wooden or glass stick so as to obtain an homogeneous crem, which is left to cool down before applied. This cream has a pH between 8 and 9 and sometimes up to 9 1/2.
b) The nutritive cream must remain spread for an adequate period of time, according to the state of preservation of the leather and which is removed later with cotton.
c)In a second stage the leather is subjected to the action of an agglutinating-hydrating solution, which comprises the excipient with trisodium phosphate (pH 9-10) (250 to 400 ml.); biodistilled glycerin (75 to 150 ml.); polyethyleniglycol 400 (25 to 75 ml.); collagen (solution) 20 to 50 ml.; sodium tetraborate in solution (3 to 6 gr.); essens of bitter almonds (5 to 10 ml.). This solution is prepared at cold temperature, stirring all the ingredients to obtain an homogeneous mixture, which may be rinsed, if it's necessary, by heating to the bain.marie.
d) The last phase of the treatment consists in spreading on the leather which has to be treated, once having absorbed the solution described in the paragraphe c), a protective cream which is uniformly spread with a chamois or a cleaning cloth and which comprises native wax (100 to 150 gr.); wool fat (100 to 200 gr.); liquid paraffin (75 to 150 ml.); biodistilled glycerin (100 to 200 ml.); and sodium tetraborate (solution) (5 to 10 gr.). This protective cream is prepared to the bain-marie, by adding to the melted native wax the wool fat and the remaining components whilst stirring at the same time so as to obtain an homgeneous mass. Once removed it is necessary to continue stirring until it has cooled down so that a uniform cream can be obtained.

## Claims

1. METHOD FOR THE REGENERATIVE AND PRESERVATIVE TREATMENT OF LEATHER, SPECIALLY BINDINGS, it consists on a first stage to extend on the leather to be treated, a cream comprising 75 to 150 ml. of saponified grease; 150 to 300 ml. of excipient; 50 to 100 ml. of biodistilled glycerin; 25 to 50 ml. of liquid paraffin; 15 to 50 ml. of cod-fish liver oil; 15 to 50 ml. of mink oil; 15 to 50 ml. of castor oil; 25 to 50 gr. of wool fat; 40 to 75 ml. of collagen (solution); 40 to 70 ml. of elastin (solution); 5 to 10 gr. of sodium tetraborate and 10 to 15 ml. of esence of bitter almonds, this cream is prepared to the bain-marie, stirring constantely to obtain an homogeneous mixture, with a pH between 8 and 9. This cream is applied to the leather after being cooled down and it will be kept extended on the leather during a time depending on the state of deterioration of the leather. After its action on the leather the cream will be removed with cotton.

2. METHOD TO THE REGENERATIVE AND PRESERVATIVE TREATMENT OF LEATHERS,SPECIALLY BINDINGS, according with the first claim, on a second stage the leather is subjected to the action of an agglutinating-hydrating solution, comprising 250 to 400 ml. of excipient with trisodium phosphate; 75 to 150 ml. of biodistilled glycerin; 25 to 75 ml. of polyethyleneglycol 400; 20 to 50 ml. of collagen (solution) 20 to 50 ml. of elastin (solution); 3 to 6 gr. of sodium tetraborate (solution) and 5 to 10 ml. of essence of bitter almonds, this solution is prepared at cool temperature, stirring constantly all the components to obtain an homogeneous mixture.

3. METHOD FOR THE REGENERATIVE AND PRESERVATIVE TREATMENT OF LEATHER, SPECIALLY BINDINGS, according with the first and second claims, the third stage which begins after the solution has been absorved by the leather, it consists in spreading by rubbing with a chamois or similar, a protective cream, comprising 100 to 150 gr. of native wax; 100 to 200 gr. of wool fat; 75 to 150 ml. of biodistilled glycerin and 5 to 10 gr. of sodium tetraborate (solution) and 5 to 10 ml. of esence of bitter almonds.

## Patentansprüche

1. VERFAHREN ZUR REGENERIERUNG UND KONSERVIERUNG VON LEDER,INSBESONDERE BUCHUMSCHLAEGE AUS LEDER. ,charakterisiert, da es sich um eine Creme handelt, die in der ersten Phase auf die Haut aufgetragen wird und sich zusammensetzt aus 75 g bis 150 g verseiftem Fett; 150 mll bis 300 ml Bindemittel; 50 ml bis 100 ml biodestilliertem Glyzerin; 25 ml bis50 ml Vaselineöl; 15 ml bis 50 ml Kabeljau-Leberöl, 15 ml bis 50 ml Nerzöl; 15 ml bis 50 ml Rizinusöl; 25 ml bis 50 mll wasserfreiem Lanonlin; 40 ml bis 75 ml Kollagen in Lösung; 40 ml bis 70 ml Elastin in Lösung; 5 g bis 10 g natriumhaltigem Tetraborat sowie und 10 ml bis 15 ml Essenz von bitteren Mandeln. Diese Creme wird im heißen Wasserbad unter ständigem Rühren bis zum Erzielen kompletter Homogenität zusammengestellt. Der pH-Wert liegt zwischen 8 und 9. Diese Creme muß vor dem Auftrag abgekühlt werden lassen und die Zeit des Verbleibens der Creme auf der Haut richtet sich nach dem Schädigungszustand dieser. Zum Entfernen der Creme nach Erzielen ihres Effektes einen Wattebausch benutzen.

2. VERFAHREN ZUR REGENERIERUNG UND KONSERVIERUNG VON LEDER, INSBESONDERE BUCHUMSCHLAEGE AUS LEDER.in Konformität mit der 1. Reivindikation, charakterisiert durch die nächste Phase, die darin besteht, die Haut der Wirkung einer agglutinierenden und hydratisierenden Lösung auszusetzen, die sich zusammensetzt aus: 250 ml bis 400 ml Bindemittel mit dreifach natriumhaltigem Phosphat;75 ml bis 150 ml biodestilliertem Glyzerin; 25 ml bis 75 mll Polyäthylen-Glykol 400; 20 ml bis 50 ml Kollagen in Lösung; 20 ml bis 50 ml Elastin in Lösung; 3 g bis 6 g natriumhaltigem Tetraborat in Lösung und 5 ml bis 10 ml Essenz von bitteren Mandeln. Diese Lösung wird im Kaltzustand unter ständigem Rühren bis zur homogenen Vermischung aller Bestandteile erstellt.

3. VERFAHREN ZUR REGENERIERUNG UND KONSERVIERUNG VON LEDER, INSBESONDERE BUCHUMSCHLAEGE AUS LEDER in Konformität mit den Reivindikationen 1 und 2. Diese charakterisiert sich, nach Absorption der Lösung nach der Reivindikation 2 durch die Haut, durch den Auftrag unter Zuhilfenahme eines weichen Tuches oder ähnlichem zu ihrer Verteilung, einer Schutzcreme, die sich zusammensetzt aus: 100 g bis 150 g echtem Bienenwachs; 100 g bis 200 g wasserfreiem Lanolin; 75 g bis 150 g Vaselineöl; 100 ml bis 200 ml biodestilliertem Glyzerin sowie natriumhaltigem Tetraborat in Lösung und 5 ml bis 10 ml Essenz von bitteren Mandeln.

## Revendications

1. PROCEDE DE TRAITEMENT REGENERATEUR ET CONSERVATEUR DES PEAUX, EN PARTICULIER DES RELIURES caractérisé en ce qu'il consiste, dans un premier temps, à appliquer uniformément sur la peau à traiter une crème composée de 75 a 150 g de graisse saponifiée; de 150 a 300 ml d'excipient; de 50 a 100 ml glycérine biodestillée; de 25 a 50 ml d'huile de vaseline; de 15 a 50 ml d'huile de foie de morue; de 15 a 50 ml d'huile de vison; de 15 a 50 ml d'huile de ricin; de 25 a 50 g de lanoline anhydre; de 40 a 75 ml de collagène en solution; de 40 a 70 ml d'élastine en solution; de 5 a 10 g de tetraborate sodique et de 10 a 15 ml d'essence d'amandes amères. Cette crème, dont le mélange homogène est obtenu au bain-marie et grâce à un processus de malaxage continu, a un pH compris entre 8 et 9. Après avoir laissé refroidir la crème, on l'applique uniformément sur la peau et on la laisse agir pendant un certain temps, selon de l'état de détérioration de la région à traiter, après quoi on procède à son élimination à l'aide d'un coton.

2. PROCEDE DE TRAITEMENT REGENERATEUR ET CONSERVATEUR DES PEAUX, EN PARTICULIER DES RELIURES selon la revendication 1, caractérisé en ce qu'il consiste, dans un deuxième temps, à soumettre la peau à l'action d'une solution agglutinante-hydratante composée de 250 a 400 ml d'excipient au phosphate trisodique; de 75 a 150 ml de glycérine biodistillée; de 25 a 75 ml de polyéthylène glycol 400; de 20 a 50 ml de solution de collagène; de 20 a 50 ml de solution d'élastine; de 3 a 6 g de tetraborate sodique en solution et de 5 a 10 ml d'essence d'amendes amères. Cette solution est obtenue à froid grâce à un processus de malaxage constant des ingrédients assurant un mélange homogène.

3. PROCEDE DE TRAITEMENT REGENERATEUR ET CONSERVATEUR DES PEAUX, EN PARTICULIER DES RELIURES selon les revendications 1 et 2, caractérisé en ce qu'il consiste, dans un troisième temps, qui commence après l'absorption par la peau de la solution décrite à la revendication 2, à appliquer en massage doux à l'aide d'une lingette ou autre, une crème protectrice composée de 100 a 150 g de cire vierge; de 100 a 200 g de lanoline anhydre; 75 a 150 ml d'huile de vaseline; de 100 a 200 ml de glycérine biodistillée; de 5 a 10 g de tetraborate sodique en solution, et de 5 a 10 g d'essence d'amendes amères.
